# FASCICULE DE BREVET EUROPEEN

(11) **EP 3 285 563 B1**
(45) Date de publication et mention de la délivrance du brevet: **24.04.2019**
(21) Numéro de dépôt: 16757707.1
(22) Date de dépôt: 03.08.2016
(51) Int. Cl.: A01G 5/02

(54) **POSTE DE CONFORMATION DE BOUQUET ROND ET INSTALLATION DE CONFORMATION DE BOUQUET COMPRENANT UNE PLURALITE DE TELS POSTES**
STATIONEN ZUR FORMUNG EINES RUNDEN BLUMENSTRAUSSES UND BLUMENSTRAUSSFORMANLAGE MIT MEHREREN SOLCHEN STATIONEN
STATION FOR FORMING A ROUND BOUQUET AND BOUQUET-FORMING FACILITY COMPRISING A PLURALITY OF SUCH STATIONS

(30) Priorité: 24.08.2015 FR 1557882; 28.10.2015 FR 1560322
(43) Date de publication de la demande: 28.02.2018
(73) Titulaire: Mecaflor, 44470 Thouare Sur Loire (FR)
(72) Inventeur: SURRIRAY, Laurent, 44470 Thouare Sur Loire (FR)
(74) Mandataire: Godineau, Valérie
(86) Numéro de dépôt international: PCT/FR2016/052020
(87) Numéro de publication internationale: WO 2017/032937

(56) Documents cités:
- WO-A1-2015/097669
- US-A1- 2015 059 240
- US-B1- 8 438 780

## Description

La présente invention concerne un poste de conformation de bouquet rond à tiges dites vrillées, à partir de fleurs coupées, ainsi qu'une installation de conformation de bouquet comprenant une pluralité de tels postes.

Elle concerne plus particulièrement un poste de conformation de bouquet rond à tiges vrillées à partir de fleurs coupées, comprenant, en configuration d'utilisation, un écran contre lequel chaque tige de fleur est apte à venir en contact d'appui par le sommet de la fleur, un support de tiges positionné en regard de l'écran et apte à supporter les tiges au niveau de leur extrémité libre et, disposé entre l'écran et le support, un gabarit de pose des fleurs.

La conformation de bouquet, en particulier de bouquet rond, est un art qui nécessite une certaine dextérité. Des postes de conformation de bouquet du type de celui mentionné ci-dessus ont d'ores et déjà été développés. Le document US 8 438 780 B1 décrit un tel poste de conformation de bouquet rond à tiges vrillées à partir de fleurs coupées. Toutefois, ces derniers ne donnent pas entière satisfaction.

Un but de l'invention est de proposer un poste de conformation de bouquet du type précité dont la conception permet la réalisation de manière aisée et rapide de bouquet rond à tiges dites vrillées sans compétence particulière de l'opérateur.

A cet effet, l'invention a pour objet, un poste de conformation de bouquet rond à tiges vrillées à partir de fleurs coupées, suivant la revendication 1, ledit poste comprenant, en configuration d'utilisation, un écran contre lequel chaque tige est apte à venir en contact d'appui par le sommet de la fleur, un support de tiges positionné en regard de l'écran et apte à supporter les tiges au niveau de leur extrémité libre et, disposé entre l'écran et le support, un gabarit de pose des fleurs,
caractérisé en ce que le gabarit de pose est formé d'une pluralité de couloirs positionnés côte-à-côte à disposition rayonnante autour du support pour une orientation d'une extrémité ouverte de chaque couloir en direction du support, et en ce que l'écran présente un profil général courbe à concavité tournée vers ledit support.

La conception du gabarit de pose et sa coopération avec l'écran et le support permettent un positionnement rapide et fiable des fleurs coupées sans nécessiter de compétence particulière de l'opérateur dans le domaine de la confection de bouquet.

Dans un mode de réalisation de l'invention, les couloirs positionnés côte-à-côte sont dans un même plan.

Dans un autre mode de réalisation de l'invention, les couloirs positionnés côte-à-côte sont disposés à des niveaux différents.

Dans ce mode de réalisation, de préférence, le gabarit de pose est formé de deux rampes à pente descendante en direction d'une zone de convergence, les couloirs étant formés chacun d'un tronçon de rampe.

Chaque rampe peut être une rampe rectiligne. Toutefois, de préférence, chaque rampe est une rampe en escalier et chaque couloir est, en dehors de la zone de convergence, délimité par au moins une marche et une contremarche dudit escalier et au moins une butée disposée sur la marche sensiblement à l'aplomb de la contremarche en contrebas, et, dans la zone de convergence, par une marche et deux contremarches en regard.

De préférence, chaque butée affecte la forme d'un doigt s'étendant en saillie du palier de marche.

De préférence, l'écran est formé par une surface courbe en arc de cercle qui ferme l'extrémité des couloirs opposée à celle ouverte en direction du support. De préférence, au moins une partie de l'écran est une portion de sphère.

De préférence, le support affecte la forme d'un berceau à fond courbe en arc de cercle et en ce que le centre de la portion en arc de cercle dudit support et le centre de la portion de sphère de l'écran sont confondus.

De préférence, le poste comprend un écran intercalaire formé au moins partiellement d'une portion de sphère, cet écran intercalaire étant positionnable entre l'écran dit principal qui présente un profil général courbe à concavité tournée vers ledit support et le support.

De préférence, le gabarit de pose est muni d'encoches ou de rainures en regard, lesdites encoches ou rainures formant un chemin de guidage apte à recevoir l'écran intercalaire pour un montage à coulissement dudit écran intercalaire à l'intérieur dudit chemin de guidage dans le sens d'un rapprochement ou d'un écartement des couloirs.

De préférence, le centre de la portion de sphère de l'écran intercalaire et le centre de la portion de sphère de l'écran dit principal sont confondus.

De préférence, les couloirs sont disposés suivant un profil courbe de centre de rayon de courbure identique ou voisin du centre du rayon de courbure de l'écran.

De préférence, l'écran et le gabarit de pose sont réalisés d'une seule pièce, de préférence par thermoformage.

Il en résulte une simplicité de fabrication du poste.

L'invention a encore pour objet une installation de conformation de bouquet, suivant la revendication 15, ladite installation comprenant un organe de transmission de mouvement sans fin, tel qu'une bande transporteuse sans fin ou une chaîne sans fin, et une pluralité de postes de conformation couplés audit organe de transmission, caractérisée en ce que l'organe de transmission de mouvement sans fin suit une trajectoire en boucle autour d'un axe vertical et en ce qu'au moins l'un des postes de conformation de bouquet est conforme à ce qui est décrit ci-dessus.

L'invention sera bien comprise à la lecture de la description suivante d'exemples de réalisation, en référence aux dessins annexés dans lesquels :
La figure 1 représente une vue en perspective d'une installation de conformation conforme à l'invention ;
La figure 2 représente une vue en perspective d'un poste de conformation conforme à l'invention à l'état dépourvu de fleurs coupées ;
La figure 3 représente une vue en perspective du poste de conformation de la figure 2 à l'état chargé en fleurs coupées.
La figure 4 représente une vue en perspective d'un autre mode de réalisation d'une installation de conformation conforme à l'invention ;
La figure 5 représente une vue de face d'un poste de conformation conforme à l'invention ;
Les figures 6 à 8 représentent chacune une vue en perspective du poste de conformation de la figure 5 au cours du montage d'un écran intercalaire ;
La figure 9 représente une vue en perspective en élévation d'un poste de conformation au cours du montage d'un écran intercalaire.

Comme mentionné ci-dessus, l'invention a pour objet un poste 1 de conformation de bouquet et une installation de conformation équipée d'au moins un tel poste, notamment pour la conformation, à partir de fleurs coupées, de bouquet rond à tiges vrillées.

Chaque fleur coupée présente une tige 20 dont une extrémité 21 est équipée d'une fleur, tandis que l'autre extrémité 22 est libre.

Le poste 1 de conformation de bouquet comprend un écran 2 dit principal contre lequel les extrémités 21 équipées de fleurs des tiges de fleurs sont aptes à prendre appui, un support 3, positionné en vis-à-vis de l'écran 2, et apte à supporter les tiges 20 au niveau de leur extrémité 22 libre, et un gabarit de pose 4 interposé entre l'écran 2 et le support 3.

De manière caractéristique à l'invention, le gabarit de pose 4 est formé d'une pluralité de couloirs 5 positionnés côte-à-côte à disposition rayonnante autour du support 3 pour une orientation de l'une des extrémités qui est ouverte de chaque couloir en direction du support 3.

Chaque couloir 5 comprend donc une extrémité fermée par l'écran 2, tandis que son extrémité opposée ouverte est orientée en direction du support 3.

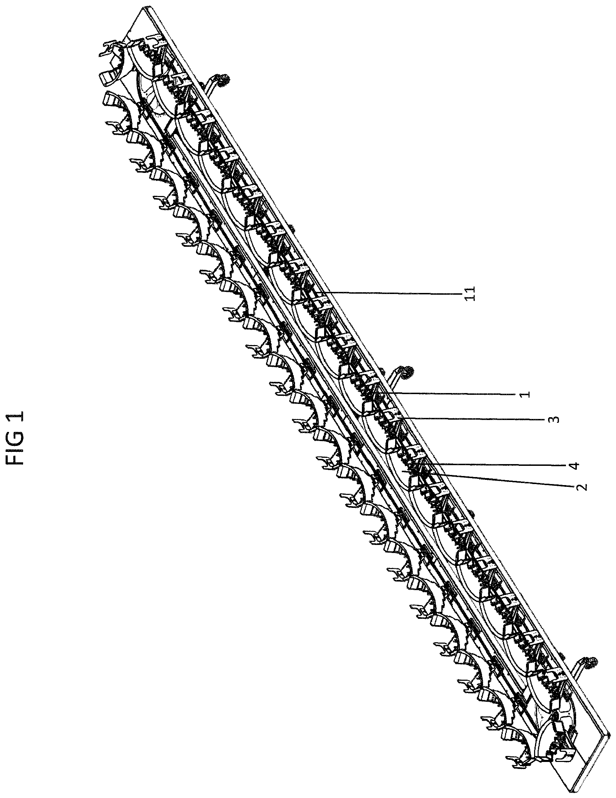

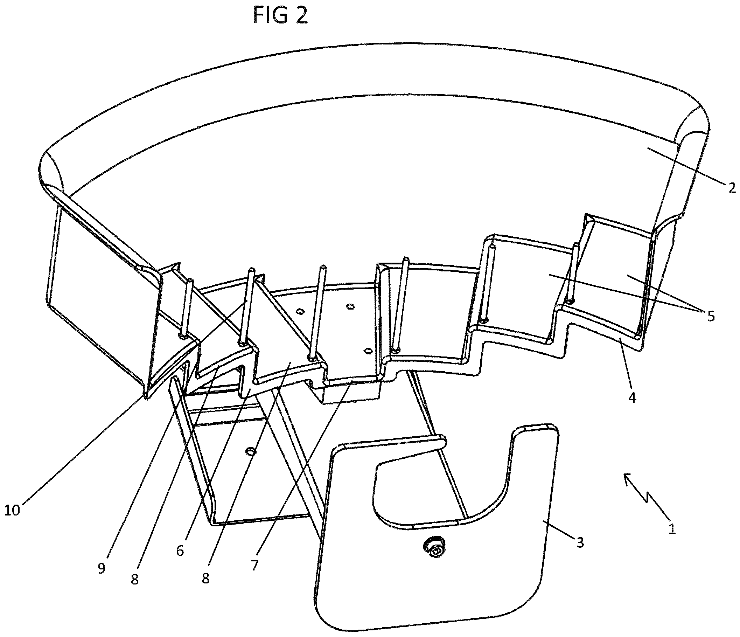

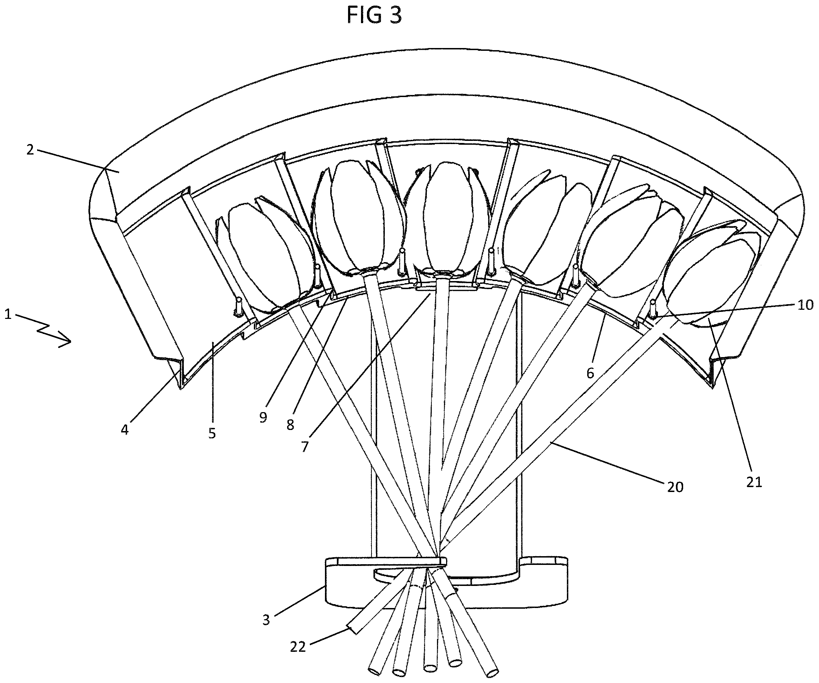

Le support 3 affecte, dans les exemples représentés aux figures 1 à 3, la forme d'un flan en métal ou en matière de synthèse positionné sur tranche en configuration d'utilisation, ledit flan étant muni d'une encoche dans sa partie supérieure. L'un des bords de l'encoche se prolonge en direction de l'intérieur de l'ouverture ménagée par l'encoche pour former un rétrécissement de ladite ouverture.

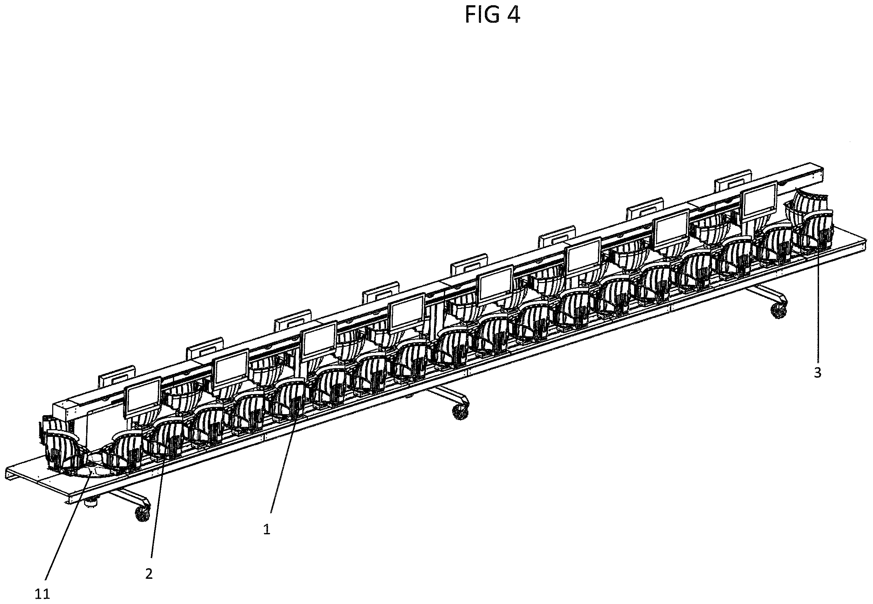

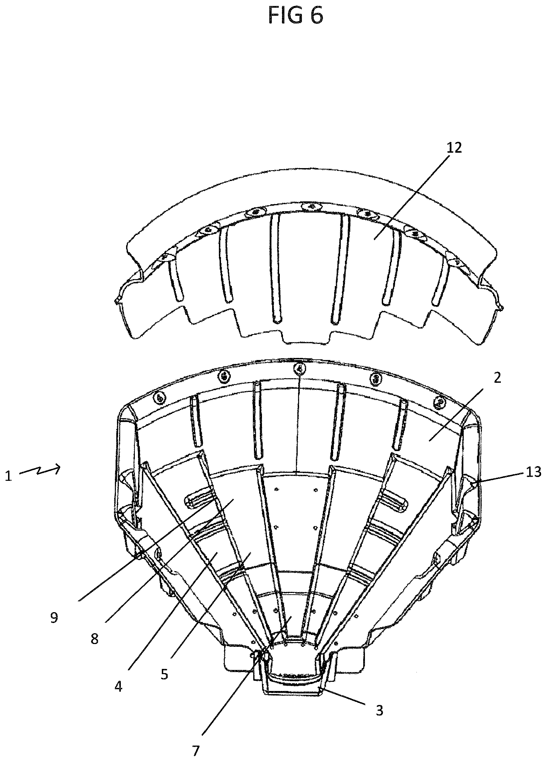

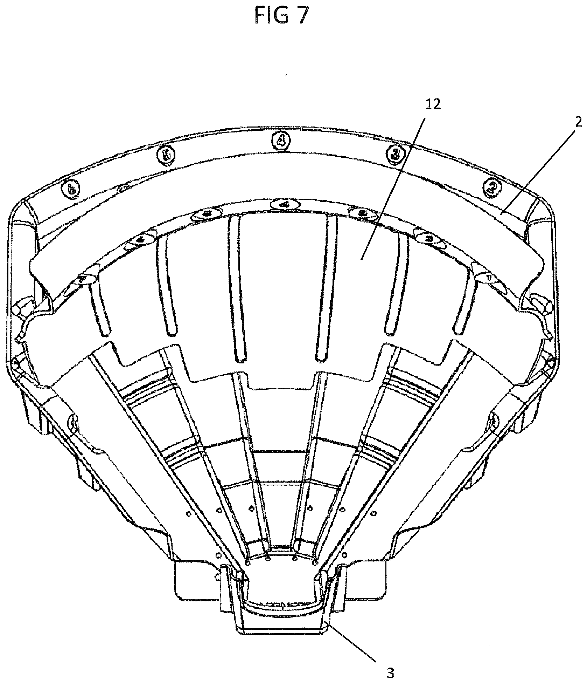

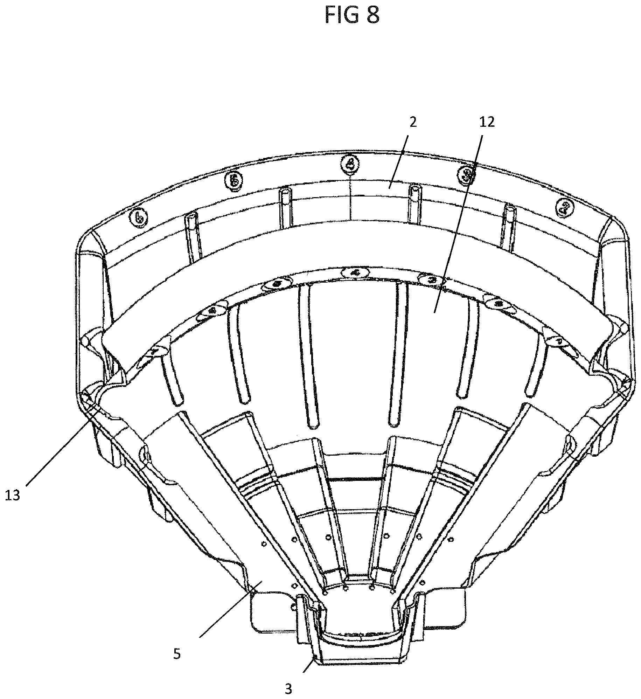

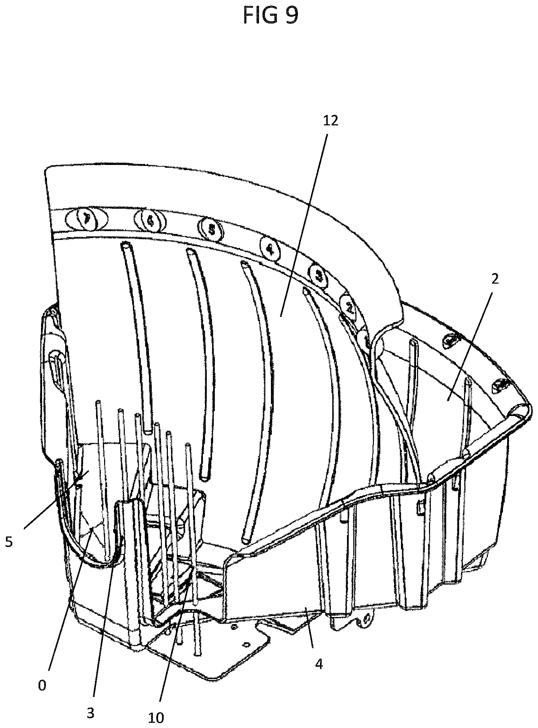

Dans l'exemple représenté aux figures 4 à 9, le support 3 affecte la forme d'un berceau à fond courbe en arc de cercle.

L'extrémité 22 libre de chaque tige est donc introduite dans l'ouverture ménagée dans l'encoche ou la forme en berceau dudit support tandis que le reste de la tige s'étend à l'intérieur d'un couloir 5.

Les couloirs 5 peuvent être positionnés côte-à-côte dans un même plan.

Dans l'exemple représenté, les couloirs 5 sont positionnés côte-à-côte mais sont disposés à des niveaux différents. En particulier, dans l'exemple représenté, le gabarit 4 de pose est formé de deux rampes à pente descendante en direction d'une zone 7 de convergence. Les couloirs 5 sont formés chacun par un tronçon de rampe.

Chaque rampe 6 est une rampe en escalier. Ainsi en dehors de la zone 7 de convergence, chaque couloir 5 est délimité par une marche 8, une contremarche 9 jouxtant le bord de la marche opposé au nez de ladite marche et au moins une butée 10 disposée sur la marche 8, sensiblement à l'aplomb de la contremarche 9 en contrebas, c'est-à-dire à plus ou moins 1 cm de la verticale de ladite contremarche en contrebas.

Cette butée 10 se présente sous forme d'un corps allongé qui affecte la forme d'un doigt s'étendant en saillie d'un palier de marche, ce corps allongé formant, avec la pente de la rampe, un angle choisi pour permettre audit doigt de s'étendre suivant une direction sensiblement verticale en configuration d'utilisation.

L'écran 2 est quant à lui un écran à profil général courbe, c'est-à-dire qu'il se développe en passant par une ligne courbe.

Dans les exemples représentés, cet écran 2 est formé par une surface courbe en arc de cercle qui ferme l'extrémité des couloirs 5 opposée à celle ouverte en direction du support 3. Le creux de l'arc de cercle est orienté en direction du support 3.

Dans l'exemple représenté aux figures 4 à 9, une partie de l'écran 2 est une portion de sphère. Cette portion de sphère qui ferme l'extrémité des couloirs 5 opposée à celle ouverte en direction du support 3 présente une concavité orientée en direction du support 3. Dans ce mode de réalisation, le centre de la portion en arc de cercle dudit support et le centre o de la portion de sphère de l'écran 2 sont confondus.

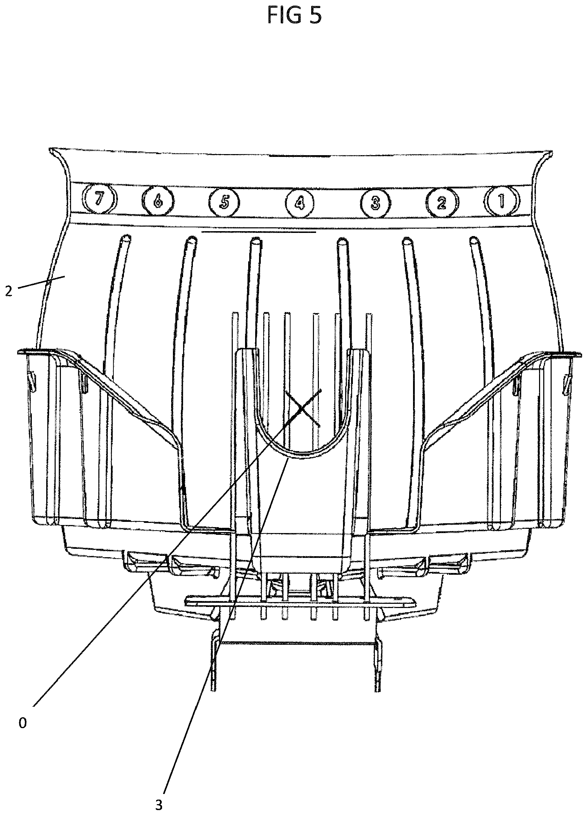

Dans l'exemple représenté aux figures 5 à 9, le poste 1 comprend encore un écran 12 intercalaire formé au moins partiellement d'une portion de sphère, cet écran 12 intercalaire étant positionnable entre l'écran 2, dit principal, qui présente un profil général courbe à concavité tournée vers ledit support 3 et le support 3. Cet écran 12 intercalaire est donc monté de manière amovible sur le gabarit 4 de pose.

Pour faciliter le montage de cet écran 12 intercalaire, le gabarit 4 de pose est muni d'encoches ou de rainures 13 en regard, lesdites encoches ou rainures 13 formant un chemin de guidage apte à recevoir l'écran 12 intercalaire pour un montage à coulissement dudit écran 12 intercalaire à l'intérieur dudit chemin de guidage dans le sens d'un rapprochement ou d'un écartement des couloirs 5. Ces encoches ou rainures 13 sont ici ménagées au niveau des surfaces verticales en regard du gabarit 4 de pose qui forment les parois d'extrémité de chaque rampe en escalier.

Dans ce mode de réalisation, le centre de la portion de sphère de l'écran 12 intercalaire et le centre de la portion de sphère de l'écran 2 dit principal sont confondus.

La présence d'un écran 12 intercalaire permet la réalisation de bouquets ronds avec des fleurs dont les tiges peuvent être plus courtes que dans le cas de réalisation de bouquets à l'aide de l'écran 2 principal. Le rôle et l'utilisation de l'écran 12 intercalaire sont identiques à ceux de l'écran 2 principal. Indépendamment du mode de réalisation de l'écran et de la présence ou non d'un écran 12 intercalaire, l'écran 2 et le gabarit 4 de pose sont ici réalisés d'une seule pièce par thermoformage. En outre, dans les modes de réalisation tels que représentés, les couloirs 5 sont disposés côte-à-côte suivant un profil courbe de rayon de courbure de centre identique ou voisin du centre de rayon de courbure de l'écran 2.

Chaque poste 1 de conformation décrit ci-dessus peut, dans le cas d'une installation de conformation multipostes, être couplé à une même bande 11 transporteuse ou à une chaîne qui suit un trajet en boucle autour d'un axe vertical. Les opérateurs sont placés autour de la trajectoire en boucle suivi par la bande transporteuse ou la chaîne.

L'installation peut encore comprendre des dispositifs d'affichage installés dans le volume disposé au dessus du trajet en boucle suivi par les postes de conformation, en particulier au dessus de l'espace formé par l'intérieur du trajet en boucle. Les opérateurs peuvent ainsi consulter les dispositifs d'affichage tels que des écrans d'affichage pour constituer le bouquet. Les couloirs étant numérotés, des informations relatives notamment au type de fleurs à insérer dans les couloirs peuvent être affichées.

Généralement, en regard de chaque poste est disposé un opérateur. Un opérateur positionne à plat une tige de fleur par couloir d'un poste de conformation en utilisant si nécessaire l'écran 2, ou l'écran 12 intercalaire lorsqu'il est présent, comme surface d'appui du sommet 21 côté fleur de la tige et en introduisant l'extrémité 22 opposée de la tige dans le support 3.

Du fait de la conformation sphérique de l'écran et des couloirs et leur positionnement relatif par rapport au support, les tiges de fleurs se superposent en se croisant sensiblement en un emplacement positionné généralement au niveau du support 3, le long d'une ligne passant par le centre de l'arc de cercle du support formé par un berceau à fond courbe en arc de cercle ou le centre de la sphère de la portion de sphère au moins partiellement constitutive de l'écran ou de l'écran intercalaire.

Le même opérateur ou un nouvel opérateur en regard duquel le poste est, après déplacement à l'aide de la bande transporteuse ou de la chaîne, positionné vient lier les tiges de fleurs entre elles et éventuellement couper les extrémités libres des tiges pour obtenir des tiges de même longueur. Le bouquet est alors achevé.

On note que du fait de la conception du poste de conformation, aucune compétence particulière n'est nécessaire à l'opérateur pour obtenir un tel résultat.

## Revendications

1. Poste (1) de conformation de bouquet rond à tiges vrillées à partir de fleurs coupées, ledit poste comprenant, en configuration d'utilisation, un écran (2) contre lequel chaque tige (20) est apte à venir en contact d'appui par le sommet de la fleur, un support (3) de tiges positionné en regard de l'écran (2) et apte à supporter les tiges (20) au niveau de leur extrémité (22) libre et, disposé entre l'écran (2) et le support (3), un gabarit (4) de pose des fleurs, **caractérisé en ce que** le gabarit (4) de pose est formé d'une pluralité de couloirs (5) positionnés côte-à-côte à disposition rayonnante autour du support (3) pour une orientation d'une extrémité ouverte de chaque couloir (5) en direction du support, et **en ce que** l'écran (2) présente un profil général courbe à concavité tournée vers ledit support (3).

2. Poste (1) selon la revendication 1,
**caractérisé en ce que** les couloirs (5) positionnés côte-à-côte sont dans un même plan.

3. Poste (1) selon la revendication 1,
**caractérisé en ce que** les couloirs (5) positionnés côte-à-côte sont disposés à des niveaux différents.

4. Poste (1) selon la revendication 3,
**caractérisé en ce que** le gabarit (4) de pose est formé de deux rampes (6) à pente descendante en direction d'une zone (7) de convergence, les couloirs (5) étant formés chacun d'un tronçon de rampe.

5. Poste (5) selon la revendication 4,
**caractérisé en ce que** chaque rampe (6) est une rampe en escalier et **en ce que** chaque couloir (5) est, en dehors de la zone (7) de convergence, délimité par au moins une marche (8) et une contremarche (9) dudit escalier et au moins une butée (10) disposée sur la marche (8) sensiblement à l'aplomb de la contremarche en contrebas, et, dans la zone (7) de convergence, par une marche (8) et deux contremarches (9) en regard.

6. Poste (1) selon la revendication 5,
**caractérisé en ce que** chaque butée (10) affecte la forme d'un doigt s'étendant en saillie du palier de marche (8).

7. Poste (1) selon l'une des revendications précédentes,
**caractérisé en ce que** l'écran (2) est formé par une surface courbe en arc de cercle qui ferme l'extrémité des couloirs (5) opposée à celle ouverte en direction du support (3).

8. Poste (1) selon l'une des revendications précédentes,
**caractérisé en ce qu'**au moins une partie de l'écran (2) est une portion de sphère.

9. Poste (1) selon la revendication précédente,
**caractérisé en ce que** le support (3) affecte la forme d'un berceau à fond courbe en arc de cercle et **en ce que** le centre de la portion en arc de cercle dudit support et le centre (o) de la portion de sphère de l'écran (2) sont confondus.

10. Poste (1) selon l'une des revendications précédentes,
**caractérisé en ce qu'**il comprend un écran (12) intercalaire formé au moins partiellement d'une portion de sphère, cet écran (12) intercalaire étant positionnable entre l'écran (2) dit principal qui présente un profil général courbe à concavité tournée vers ledit support (3) et le support (3)

11. Poste (1) selon la revendication précédente,
**caractérisé en ce que** le gabarit (4) de pose est muni d'encoches ou de rainures (13) en regard, lesdites encoches ou rainures (13) formant un chemin de guidage apte à recevoir l'écran (12) intercalaire pour un montage à coulissement dudit écran (12) intercalaire à l'intérieur dudit chemin de guidage dans le sens d'un rapprochement ou d'un écartement des couloirs (5)

12. Poste (1) selon l'une des revendications 10 ou 11 prise en combinaison avec la revendication 8,
**caractérisé en ce que** le centre de la portion de sphère de l'écran (12) intercalaire et le centre de la portion de sphère de l'écran (2) dit principal sont confondus.

13. Poste (1) selon l'une des revendications précédentes,
**caractérisée en ce que** les couloirs (5) sont disposés suivant un profil courbe de centre de rayon de courbure identique ou voisin du centre du rayon de courbure de l'écran (2).

14. Poste (1) selon l'une des revendications précédentes,
**caractérisé en ce que** l'écran (2) et le gabarit (4) de pose sont réalisés d'une seule pièce, de préférence par thermoformage.

15. Installation de conformation de bouquet, ladite installation comprenant un organe (11) de transmission de mouvement sans fin, tel qu'une bande transporteuse sans fin ou une chaîne sans fin, et une pluralité de postes (1) de conformation couplés à l'organe de transmission de mouvement sans fin, **caractérisée en ce que** l'organe (11) de transmission de mouvement sans fin suit une trajectoire en boucle autour d'un axe vertical et **en ce qu'**au moins l'un des postes (1) de conformation de bouquet est conforme à l'une des revendications 1 à 14.

## Patentansprüche

1. Station (1) zur Formung eines runden Blumenstraußes mit gewundenen Stengeln aus Schnittblumen, wobei die Station in der Verwendungskonfiguration einen Schirm (2) umfasst, gegen den jeder Stengel (20) in Auflagekontakt durch den Scheitel der Blume kommen kann, eine Stengelstütze (3), die gegenüber dem Schirm (2) positioniert und ausgelegt ist, um die Stengel (20) auf der Ebene ihres freien Endes (22) zu stützen, und, angeordnet zwischen dem Schirm (2) und der Stütze (3), eine Schablone (4) zur Auflage der Blumen, **dadurch gekennzeichnet, dass** die Schablone (4) zur Auflage aus einer Vielzahl von Gängen (5) gebildet ist, die Seite an Seite in strahlenförmiger Anordnung um die Stütze (3) für eine Ausrichtung von einem offenen Ende jedes Gangs (5) in Richtung des Trägers positioniert ist, und dadurch, dass der Schirm (2) ein im Allgemeinen gekrümmtes Profil mit einer Konkavität aufweist, der gegen den Träger (3) gerichtet ist.

2. Station (1) nach Anspruch 1, **dadurch gekennzeichnet, dass** sich die Gänge (5), die Seite an Seite positioniert sind, auf einer gleichen Ebene befinden.

3. Station (1) nach Anspruch 1, **dadurch gekennzeichnet, dass** die Gänge (5), die Seite an Seite positioniert sind, auf verschiedenen Ebenen angeordnet sind.

4. Station (1) nach Anspruch 3, **dadurch gekennzeichnet, dass** die Schablone (4) zur Auflage aus zwei Rampen (6) mit abfallender Neigung in Richtung eines Konvergenzbereichs (7) gebildet ist, wobei die Gänge (5) jeweils aus einem Rampenabschnitt gebildet sind.

5. Station (5) nach Anspruch 4, **dadurch gekennzeichnet, dass** jede Rampe (6) eine treppenförmige Rampe ist, und dadurch, dass jeder Gang (5), außerhalb des Konvergenzbereichs (7) von mindestens Stufe (8) und einer Gegenstufe (9) der Treppe und mindestens einem Anschlag (10) begrenzt ist, der auf der Stufe (8) im Wesentlichen senkrecht zur Gegenstufe unterhalb von, und in der Konvergenzzone (7) durch eine Stufe (8) und zwei gegenüberliegende Gegenstufen (9) angeordnet ist.

6. Station (1) nach Anspruch 5, **dadurch gekennzeichnet, dass** jeder Anschlag (10) die Form eines Fingers aufweist, der sich vorspringend vom Stufenabsatz (8) erstreckt.

7. Station (1) nach einem der vorhergehenden Ansprüche, **dadurch gekennzeichnet, dass** der Schirm (2) durch eine gekrümmte Fläche im Kreisbogen gebildet ist, die das Ende der Gänge (5) gegenüber dem Geöffneten in Richtung des Trägers (3) schließt.

8. Station (1) nach einem der vorhergehenden Ansprüche, **dadurch gekennzeichnet, dass** mindestens ein Teil des Schirms (2) ein sphärischer Abschnitt ist.

9. Station (1) nach dem vorhergehenden Anspruch 5, **dadurch gekennzeichnet, dass** der Träger (3) die Form einer Wiege mit gekrümmtem Boden im Kreisbogen aufweist, und dadurch, dass das Zentrum des Abschnitts im Kreisbogen des Trägers (o) und der sphärischen Abschnitts des Schirms (2) überlagert sind.

10. Station (1) nach einem der vorhergehenden Ansprüche, **dadurch gekennzeichnet, dass** sie einen zwischengeschalteten Schirm (12) umfasst, der mindestens teilweise aus einem sphärischen Abschnitt gebildet ist, wobei dieser zwischengeschaltete Schirm (12) zwischen dem Schirm (2), bezeichnet als Hauptschirm, der ein im Allgemeinen gekrümmtes Profil mit einer Konkavität aufweist, die gegen den Träger (3) gerichtet ist, und dem Träger (3) positioniert werden kann.

11. Station (1) nach dem vorhergehenden Anspruch, **dadurch gekennzeichnet, dass** die Schablone (4) zur Auflage mit einander gegenüber liegenden Nuten oder Rillen (13) ausgestattet ist, wobei die Nuten oder Rillen (13) einen Führungsweg bilden, der ausgelegt ist, um den zwischengeschalteten Schirm (12) für eine gleitende Montage des zwischengeschalteten Schirms (12) im Inneren des Führungswegs in Richtung einer Annäherung oder einer Beabstandung der Gänge (5) aufzunehmen.

12. Station (1) nach einem der Ansprüche 10 oder 11 in Kombination mit Anspruch 8, **dadurch gekennzeichnet, dass** das Zentrum des zwischengeschalteten sphärischen Abschnitts (12) und das Zentrum des sphärischen Abschnitts des Schirms (2), bezeichnet als Hauptschirm, überlagert sind.

13. Station (1) nach einem der vorhergehenden Ansprüche, **dadurch gekennzeichnet, dass** die Gänge (5) gemäß einem gekrümmten Profil mit einem Zentrum des Krümmungsradius angeordnet sind, das identisch oder benachbart dem Zentrum des Krümmungsradius des Schirms (2) ist.

14. Station (1) nach einem der vorhergehenden Ansprüche, **dadurch gekennzeichnet, dass** der Schirm (2) und die Schablone (4) zur Auflage aus einem einzigen Stück hergestellt sind, vorzugsweise durch Thermoformung.

15. Anlage zur Formung eines Blumenstraußes, wobei die Anlage ein Organ (11) zur Übertragung von Endlosbewegung umfasst, wie z. B. ein Endlostransportband oder eine Endloskette und eine Vielzahl von Stationen (1) zur Formung, die an das Organ zur Übertragung von Endlosbewegung gekoppelt sind, **dadurch gekennzeichnet, dass** das Organ (11) zur Übertragung von Endlosbewegung einem ununterbrochenen Weg um eine vertikale Achse folgt, und dadurch, dass mindestens eine der Stationen (1) zur Formung eines Blumenstraußes einem der Ansprüche 1 bis 14 entspricht.

## Claims

1. A station (1) for forming a round bouquet with twisted stems from cut flowers, said station comprising, in the usage configuration, a screen (2) against which each stem (20) is able to bear by the top of the flower, a stem holder (3) positioned opposite the screen (2) and able to support the stems (20) at their free end (22) and, positioned between the screen (2) and the holder (3), a flower placement template (4),
**characterized in that** the placement template (4) is formed by a plurality of passages (5) positioned side by side in an arrangement radiating around the holder (3) for an orientation of an open end of each passage (5) toward the holder, and **in that** the screen (2) has a curved general profile with the concave side facing said holder (3).

2. The station (1) according to claim 1,
**characterized in that** the passages (5) positioned side by side are in a same plane.

3. The station (1) according to claim 1,
**characterized in that** the passages (5) positioned side by side are positioned on different levels.

4. The station (1) according to claim 3,
**characterized in that** the placement template (4) is formed by two ramps (6) with a slope descending toward a convergence zone (7), the passages (5) each being formed by a ramp segment.

5. The station (5) according to claim 4,
**characterized in that** each ramp (6) is a staircase -shaped ramp and **in that** each passage (5) is, outside the convergence zone (7), delimited by at least a step (8) and a riser (9) of said stair and at least one stop (10) positioned on the step (8) substantially overhanging the riser below, and, in the convergence zone (7), by a step (8) and two facing risers (9).

6. The station (1) according to claim 5,
**characterized in that** each stop (10) assumes the form of a finger protruding from the step landing (8).

7. The station (1) according to one of the preceding claims,
**characterized in that** the screen (2) is formed by a surface curved in an arc of circle that closes the end of the passages (5) opposite the end toward the holder (3).

8. The station (1) according to one of the preceding claims,
**characterized in that** at least a portion of the screen (2) is a sphere portion.

9. The station (1) according to the preceding claim,
**characterized in that** the holder (3) assumes the form of a cradle with a bottom curved in an arc of circle and **in that** the center of the arc of circle portion of said holder and the center (o) of the sphere portion of the screen (2) are combined.

10. The station (1) according to one of the preceding claims, **characterized in that** it comprises an intercalated screen (12) formed at least partially by a sphere portion, said intercalated screen (12) being able to be positioned between the so-called main screen (2), which has a curved general profile with the concave side turned toward said holder (3), and the holder (3).

11. The station (1) according to the preceding claim,
**characterized in that** the placement template (4) is provided with opposite notches or grooves (13), said notches or grooves (13) forming a guide path able to receive the intercalated screen (12) for sliding mounting of said intercalated screen (12) inside said guide path in the direction of the passages (5) coming closer or moving further away.

12. The station (1) according to one of claims 10 or 11 combined with claim 8,
**characterized in that** the center of the sphere portion of the intercalated screen (12) and the center of the sphere portion of the so-called main screen (2) are combined.

13. The station (1) according to one of the preceding claims,
**characterized in that** the passages (5) are positioned along a curve with a curve radius center identical or close to the center of the curve radius of the screen (2).

14. The station (1) according to one of the preceding claims,
**characterized in that** the screen (2) and the placement template (4) are made in one piece, preferably by thermoforming.

15. A facility for forming a bouquet, said facility comprising an endless movement transmission member (11), such as an endless conveyor belt or an endless chain, and a plurality of forming stations (1) coupled to the endless movement transmission member, **characterized in that** the endless movement transmission member (11) follows a looped trajectory around a vertical axis and **in that** at least one of the bouquet forming stations (1) is according to one of claims 1 to 14.
